# EUROPEAN PATENT APPLICATION

(11) **EP 2 239 045 A1**
(43) Date of publication of application: **13.10.2010**
(21) Application number: 09703345.0
(22) Date of filing: 19.01.2009
(51) Int. Cl.: B01D 63/08, B01D 61/14, B01D 61/18, G01N 1/10

(54) **POROUS FILTER CARTRIDGE**

(30) Priority: 21.01.2008 JP 2008010604
(71) Applicant: FUJIFILM Corporation, Tokyo 106-0031 (JP)
(72) Inventor: The designation of the inventor has not yet been filed
(74) Representative: HOFFMANN EITLE
(86) International application number: PCT/JP2009/050629
(87) International publication number: WO 2009/093536

(57) **Abstract**

An object of the invention is to provide a porous filter cartridge that hardly involves the contamination problem, provides an economic advantage, and is able to achieve efficient filtration and extraction without breaking. The object is accomplished by a porous filter cartridge including a bottomed cylindrical cap 5 with an outlet opening 29 at the bottom and a porous filter held inside the cap 5 on the bottom. At the bottom of the cap 5 a plurality of ribs 35, 37, and 39 are arranged radially about the outlet opening 29 in a standing condition to support the porous filter. At least some of the ribs are connected to each other at the center of the outlet opening 29 to span the outlet opening 29 to form a junction 43. The junction 43 has a top surface 41 convex to the porous filter side.

## Description

### TECHNICAL FIELD

This invention relates to a porous filter cartridge having a bottomed cylindrical cap and a porous filter held at the bottom of the cap.

### BACKGROUND ART

Porous filters are widely used for studies and analyses in laboratories and factories for the purpose of filtration of a liquid or separation and purification of a specific substance in a liquid. A porous filter is used, for example, in a manner that it is secured between two members each having a passageway for liquid so that it is held in the flow of a liquid. Because a porous filter of this type is generally used in precise experimentation and measurement, it is required to be clean. That is, a porous filter is usually designed to be used once and then disposed of. Therefore, it is convenient from the viewpoint of cleanness and user-friendliness that a porous filter is supplied in the form of a cartridge ready to be used for liquid passage.

With a cartridge having a porous membrane to carry out liquid filtration or extraction, it is generally necessary that the liquid be pressurized by a pump, gravity, or a centrifugal force generated in a centrifuge or by means of a compressed gas in order to allow the liquid to pass through the porous filter. Making the filtrate, the liquid having passed through the porous membrane, be smoothly withdrawn not only prevents a loss of the liquid but also provides an advantage discussed below. In the cases where a nucleic acid or the like of, for example, blood or cells is adsorbed onto the porous membrane and subsequently recovered, when the operation after the adsorption involves changeover of liquid, such as in a washing step using a washing solution or a recovery step using a recovering solution, the smooth withdrawal of the filtrate reduces the residue of the liquid before the changeover. This allows for extracting high purity nucleic acids. If the filtrate does not flow smoothly, it is expected that the filter membrane can break, resulting in serious performance degradation. If a partial failure of filtration occurs in the filtration and extraction steps, the filter has a decreased filtration area and can fail to exhibit the expected ability.
The following is examples of conventional porous filter cartridges. Patent document 1 (see below) discloses a configuration having ribs, on which a porous filter rests, extending in the circumferential direction and concentrically arranged. The ribs are formed on the inner wall of the cartridge housing in a coarse mesh pattern. Patent document 2 (see below) discloses a structure having a filler incorporated into a membrane-supporting part that supports a porous filter. Patent document 3 (see below) discloses a configuration in which a porous supporting material is incorporated into a membrane-supporting part that supports a porous filter.
Patent document 1: US Patent 5792354
Patent document 2: US Publication No. 2002/0012982
Patent document 3: US Patent 6586585

### DISCLOSURE OF THE INVENTION

### Problem to be Solved by the Invention

The problem with the conventional porous filter cartridge disclosed in patent document 1 is that, because a liquid is liable to remain upstream the central outlet, contamination can occur, making it difficult to perform efficient measurement.
The problem with the conventional porous filter cartridge of patent document 2 is that, because the pressure resistance increases, an increased amount of a liquid is required, and the residual liquid problem tends to occur to cause contamination, making it difficult to achieve efficient measurement.
The conventional porous filter cartridge according to patent document 3 has the same problem of increased pressure resistance as with that of patent document 2. That is, an increased amount of a liquid is required, and a liquid tends to remain to cause contamination, making it difficult to perform efficient measurement and eventually leading to an increase in cost.
Additionally, in any of the porous filter cartridges of patent documents 1 to 3, a liquid is made to flow under pressure so that the porous filter might break by the pressure.
In particular, a porous filter cartridge used to extract nucleic acids is desired to be capable of recovering nucleic acids with high purity and high concentration from a small amount of a specimen. In recovering nucleic acids from a cellular specimen, in particular, the specimen is apt to clog a porous membrane, and this has necessitated using a filter with an increased filter area. In that case, a reduction of the number or area of supporting ribs would easily cause stress concentration on the filter, resulting in a break of the filter.
In the light of the above circumstances, an object of the invention is to provide a porous filter cartridge that hardly involves the contamination problem, provides an economic advantage, and is able to achieve efficient filtration and extraction without breaking.

### Means for Solving the Problem

The above object of the invention is accomplished by the following configurations.
(1) A porous filter cartridge comprising a cylindrical cap having a bottom and an outlet opening at the bottom and a porous filter held inside the cap on the bottom, the cap having a plurality of ribs arranged radially about the outlet opening in a standing condition at the bottom thereof, at least some of the ribs being connected to each other at the center of the outlet opening to span the outlet opening and forming a junction therebetween, and the junction having a top surface convex to the porous filter side.

According to the configuration of the porous filter cartridge of the invention, since the junction of the ribs has a convex surface, the contact area between the ribs' top surface and the porous filter is minimized to provide an increased effective filter area.

(2) The porous filter cartridge as described in 1), wherein the ribs have a series of protrusions bulging toward the porous filter side on the top surface thereof.

According to this embodiment, providing the protrusions on the top of the ribs diminishes the contact area between the ribs' top surface and the porous filter. As a result, the effective filter area is increased.

(3) The porous filter cartridge as described in (1) or (2), wherein each of the ribs has rounded edges on its top side in contact with the porous filter.

With the ribs' edges rounded on their top side, stress concentration hardly occurs in the porous filter in contact therewith. As a result, the porous filter is prevented from damages, such as breaking.

(4) The porous filter cartridge as described in any one of (1) to (3), wherein the top surface of each of the ribs has a height from the bottom of the cap varied in the radial direction such that the porous filter in contact with the top surface of the ribs has a concave shape to be directed to the outlet opening.

According to the above embodiment, since the height of the ribs is designed so that the porous filter has a concave shape to be directed to the outlet opening, a liquid passing through the filter is finally made to gather in the center of the filter. As a result, the residual liquid problem is prevented to assure efficient liquid passage. Moreover, the porous filter is prevented from lifting when a negative pressure is applied to the cartridge to cause a backflow.

(5) The porous filter cartridge as described in any one of (1) to (4), wherein the ribs at the bottom of the cap comprise ribs having different lengths in the radial direction from the center of the cap.

The circumferential spacing between radially extending ribs increases toward the periphery. According to the above configuration, however, the arrangement density of the ribs is leveled from the central side to the peripheral side by radially alternating short ribs and long ribs.

(6) The porous filter cartridge as described in any one of (1) to (5), wherein the porous filter and the cap are integral with each other and formed by insert molding.

According to the above embodiment, the cap and the porous filter are easily integrated with each other with intimate contact.

(7) The porous filter cartridge as described in any one of (1) to (6), wherein the porous filter comprises a nucleic acid-absorbing porous membrane.

The porous filter cartridge having the above configuration allows for the following particular use. A sample solution containing a nucleic acid is poured into the porous filter cartridge, and a pressure is applied into the cartridge to make the sample solution pass through the porous filter, whereby the nucleic acid is adsorbed onto the porous filter. Subsequently, a washing solution and then an eluting solution are poured to extract the nucleic acid adsorbed on the porous filter.

### Effect of Invention

The porous filter cartridge of the invention hardly involves the contamination problem, provides an economic advantage, and is able to achieve efficient filtration and extraction without breakage.

### BRIEF DESCRIPTION OF DRAWINGS

Fig. 1 is a perspective view of a porous filter cartridge of the invention.
Fig. 2 is an exploded view of the porous filter cartridge shown in Fig. 1.
Fig. 3 is a plan view of a cap used to make a porous filter cartridge.
Fig. 4 is a cross-sectional view of the cap shown in Fig. 3, taken along line I-I.
Fig. 5 is a perspective view of the cap of Fig. 3 with a part cut away.
Fig. 6 is a cross-sectional view illustrating a usage of the porous filter cartridge of Fig. 1.
Fig. 7 is a cross-sectional view illustrating the action of the porous filter cartridge having a porous filter.
Fig. 8 is a perspective view of another cap with a part cut away (equivalent to Fig. 5).
Fig. 9 is a cross-sectional view (equivalent to Fig. 4) of another cap of another porous filter cartridge, taken along line I-I.
Fig. 10 is partial cross-sectional views illustrating at (a) through (d), step by step, the making of the cap of a porous filter cartridge of the invention.
Fig. 11 is an enlarged perspective view of the tip of a pin.
Fig. 12 is an enlarged perspective view of the tip of another pin.
Fig. 13 illustrates, by each of the steps of (a) through (e), the making of a porous filter cartridge of the invention.
Fig. 14 is a schematic block diagram of a system configuration for nucleic acid extraction.
Fig. 15 illustrates steps (a) through (g) for extracting nucleic acids.
Fig. 16 is a cross-sectional view of a cap having a junction with a flat top surface.
Fig. 17 is a plan view (a) and a partial cross-sectional perspective view (b) of a cap having no crossing ribs.

### Designation of Reference Numerals

- 1: Porous filter cartridge
- 3: Barrel
- 5: Cap
- 7: Porous filter
- 19: Inlet
- 27: Rib
- 29: Outlet opening
- 35: Crossing rib
- 37: Auxiliary rib
- 39: Auxiliary rib
- 41: Convex surface
- 43: Junction
- 49: Protrusion

### BEST MODE FOR CARRYING OUT THE INVENTION

Preferred embodiments of the porous filter cartridge according to the invention will be described in detail with reference to the accompanying drawings.

### [I] First embodiment

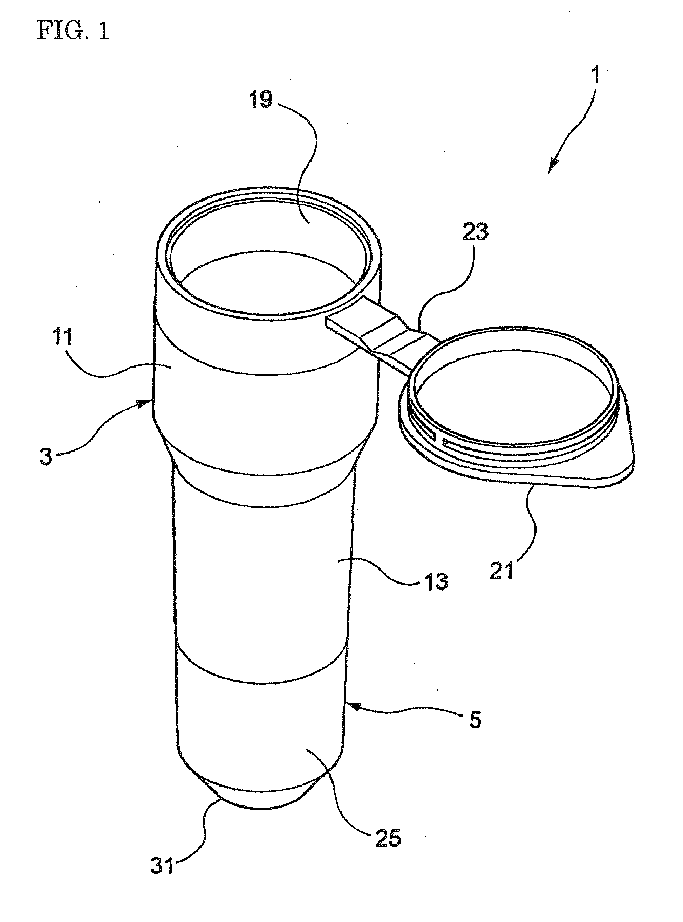

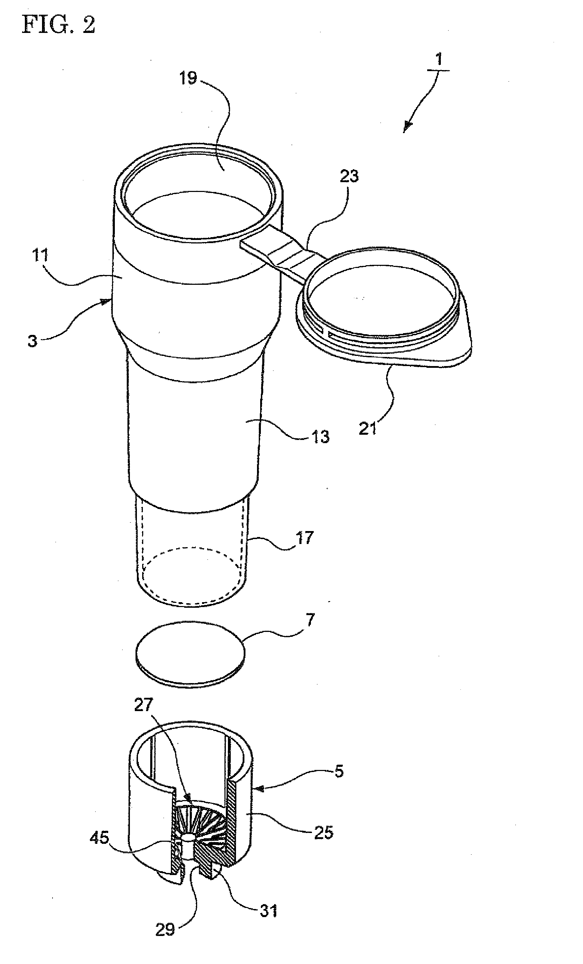

Fig. 1 is a perspective view of a porous filter cartridge of the invention, and Fig. 2 is an exploded view of the porous filter cartridge of Fig. 1.

As illustrated in Figs. 1 and 2, the porous filter cartridge of a first embodiment mainly includes a barrel 3, a cap 5, and a porous filter 7.

The barrel 3 is made of an insert injection moldable resin material, such as polypropylene, polystyrene, polycarbonate, or polyvinyl chloride. The barrel 3 has an inlet 19 at the upper part of its cylindrical shape and a lid 21 connected to the inlet 19 via a hinge 23. The barrel 3 is composed of a large diameter portion 11, a small diameter portion 13, and a fused portion 17 that is fused to the cap 5 below the small diameter portion 13.

The cap 5 is a bottomed circular cylinder that is, similarly to the barrel 3, made of an insert injection moldable resin material, such as polypropylene, polystyrene, polycarbonate, or polyvinyl chloride. The cap 5 has a cylindrical portion 25, in which the fused portion 17 of the barrel 3 is inserted and fixed. The manner of the fixing will be described later. The cap 5 has ribs 27 at the bottom of the cylindrical portion 25 and an outlet opening 29 in the radially central part of the ribs 27. The outlet opening 29 has a nozzle 31 extending therefrom.

Inside the cap 5, the porous filter 7 is held on the top surface of the ribs 27. Each rib 27 has rounded edges on its top side to prevent cracking of the porous filter 7 placed in contact with the ribs.

The porous filter 7 is a circular porous membrane made, e.g., of polytetrafluoroethylene (PTFE), polyamide, polypropylene, or polycarbonate and cut to practically the same size as the inner diameter of the cap 5.

The porous filter 7 is a porous membrane made that is made of an organic polymer and has a large number of fine pores for use in the filtration of a liquid to purify the liquid or to separate (by adsorption) and collect a target substance, such as a nucleic acid. The porous filter 7 suitably has a thickness of 10 to 500 µm. For use as a nucleic acid-adsorbing porous membrane, a porous membrane made of a surface-saponified acetyl cellulose, preferably having a degree of saponification of at least 5%, is suitable. While the acetyl cellulose may be any of monoacetyl cellulose, diacetyl cellulose, and triacetyl cellulose, triacetyl cellulose is particularly preferred. The nucleic acid-adsorbing porous membrane preferably has a minimum pore size of 0.22 µm or greater, a maximum to minimum pore size ratio of 2 or more, a porosity of 50% to 95%, a bubble point of 9.8 to 980 kPa (0.1 to 10 kg/cm²), a pressure loss of 0.1 to 100 kPa, and a nucleic acid adsorption capacity of at least 0.1 µg per mg of the membrane. As used herein, the term "pressure loss" denotes the minimum pressure per 100 µm of the thickness of a porous membrane necessary to permit water to pass through.

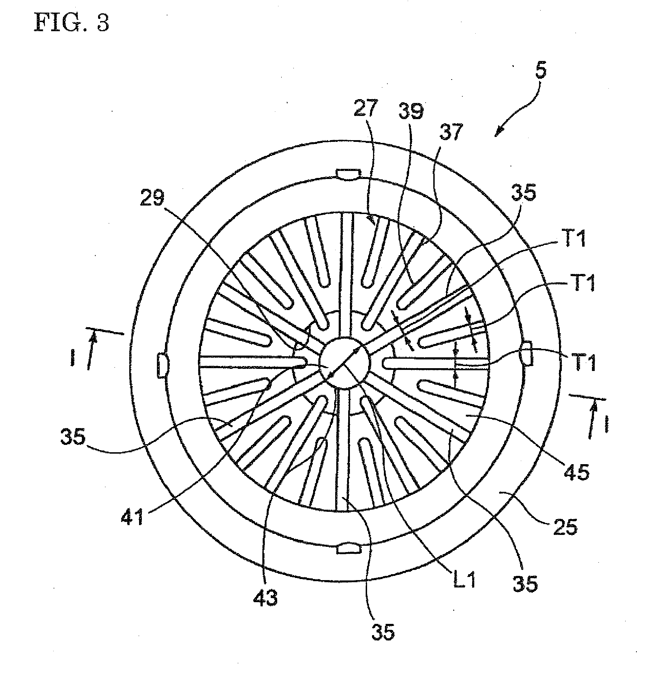

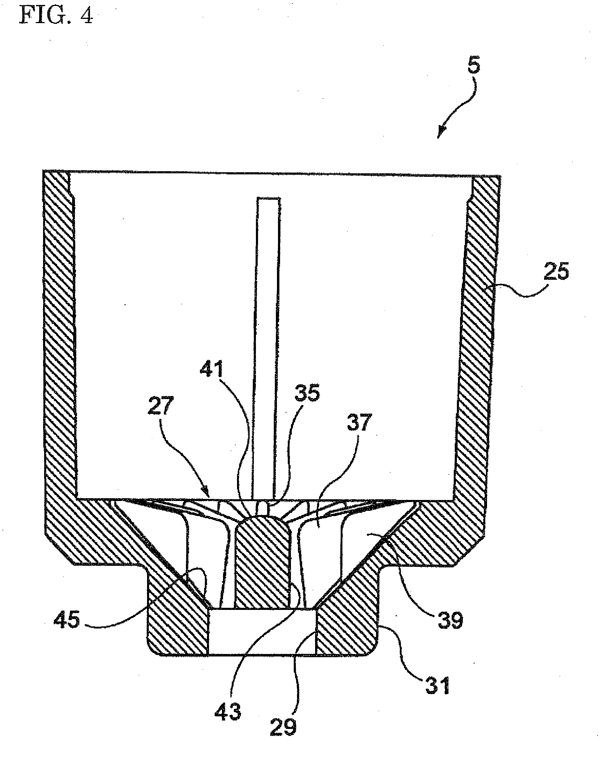

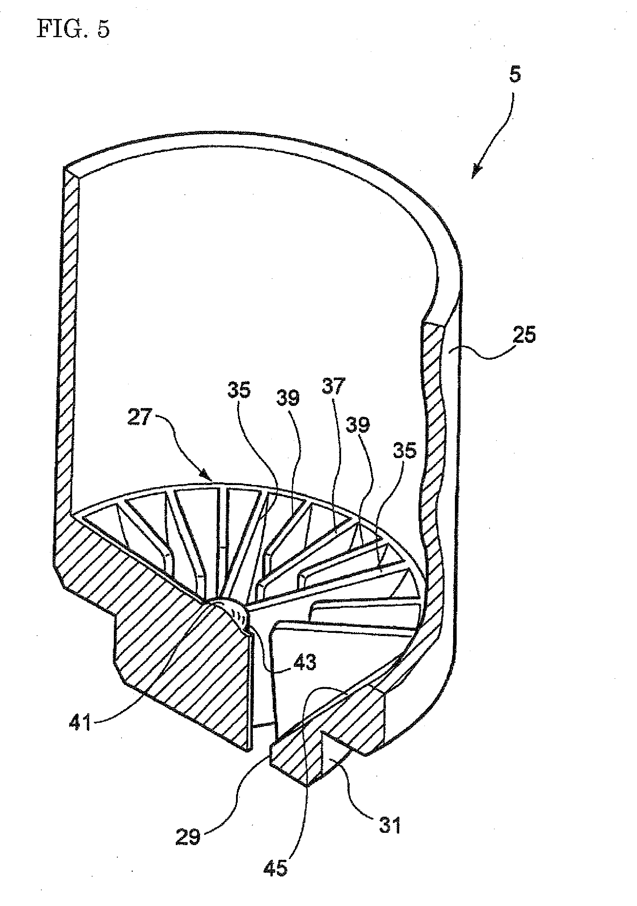

Fig. 3 is a plan view of a cap used to assemble the porous filter cartridge of Fig. 1. Fig. 4 is a cross-section of the cap shown in Fig. 3, taken along line I-I. Fig. 5 is a perspective of the cap of Fig. 3 with a part cut away.
As illustrated in Figs. 3, 4, and 5, the ribs 27 are arranged radially at the bottom inside the cap 5. The ribs 27 include a plurality of (six in the illustrated embodiment) crossing ribs 35 that are connected at the center of the outlet opening 29 to span the outlet opening 29 and two kinds of auxiliary ribs 37 and 39 different in length in the radial direction. The auxiliary ribs 37 and 39 are arranged circumferentially with equal spacing (at equal central angle intervals) between adjacent crossing ribs 35. The length of each auxiliary rib 37 in the radial direction is such that its end proximal to the center of the cap is radially inward of the inner diameter of the outlet opening 29. The length of each auxiliary rib 39 in the radial direction is such that its end proximal to the center of the cap is radially outward of the inner diameter of the opening 29. Each auxiliary rib 37 is located between adjacent crossing ribs 35, and each auxiliary rib 39 is disposed between each crossing rib 35 and each auxiliary rib 37. The inner bottom of the cap 5 is defined by a sloped surface 45 that is sloped downward to the outlet opening 29. The crossing ribs 35 and the auxiliary ribs 37 and 39 are provided in a condition standing on the sloped surface 45 toward the porous filter side. The junction 43 of the crossing ribs 35 at the center of the cap 5 has a convex surface 41 that is bulging (convex) toward the porous filter side.

Each of the crossing ribs 35 and the auxiliary ribs 37 and 39 is formed in a platy shape with a thickness T1, e.g., of 0.2 mm and has its top surface sloped downward from the cylindrical portion 25 toward the center of the cap.

The junction 43 is, as shown in Fig. 4, located in the center of, and above, the outlet opening 29, where the crossing ribs 35 cross each other. The junction 43 has the shape of a circular column connected with the crossing ribs 35. The outer diameter L1 of the junction 43 is larger than the thickness T1 of the crossing ribs 35.

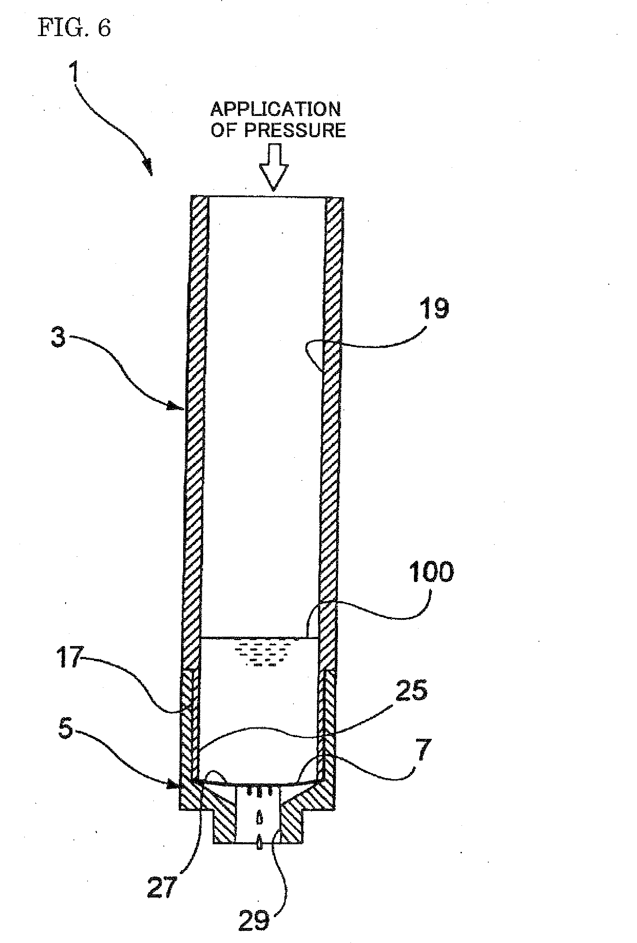

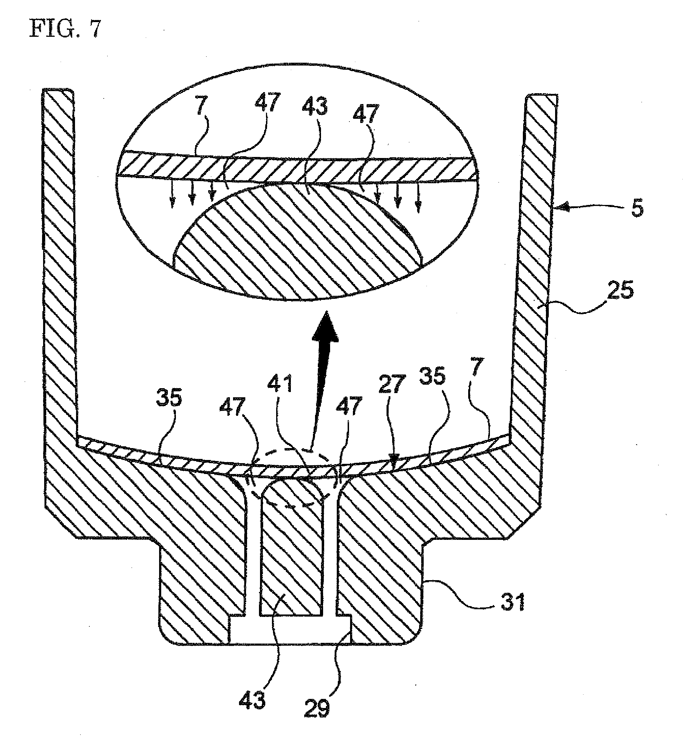

Fig. 6 is a cross-sectional view illustrating a use of the porous filter cartridge of Fig. 1. Fig. 7 is a cross-sectional view illustrating the action of the porous filter cartridge having a porous filter held therein.
The usage of the above-configured porous filter cartridge 1 illustrated in Fig. 6 is as follows. Use in nucleic acid extraction will be explained for instance. A sample solution containing nucleic acids is prepared from a biological material, such as body fluids including whole blood collected as a specimen, plasma, serum, urine, feces, semen, and saliva; plants (or parts thereof), animals (or parts thereof); or lysates or homogenates thereof. The solution prepared is treated with an aqueous solution containing a lysing reagent that lyses cell membranes to solubilized nucleic acids, whereby the cell membranes and nuclear membranes are lysed, and nucleic acids are dispersed in the aqueous solution. In the case of a whole blood specimen, for example, guanidine hydrochloride, Triton-X100, and Protease K (from Sigma) are added to the specimen, followed by incubation at 60°C for 10 minutes to accomplish removal of erythrocytes, removal of various proteins, lysis of leucocytes, and lysis of nuclear membranes.

To the resulting aqueous solution having nucleic acids dispersed therein is added a water soluble organic solvent, e. g. , ethanol to prepare a sample solution 100. The sample solution 100 is poured into the inlet opening 19 and made to flow under pressure toward the outlet opening 29 at the tip of the nozzle 31. The nucleic acids in the sample solution are thus adsorbed by the porous filter 7.

In the above described pressure application system in which the sample solution 100 is forced to pass through the porous filter under pressure, the sample solution 100 is apt to flow toward the periphery of the porous filter 7 as compared with the case of a centrifugation system in which a sample solution is forced to pass through by a centrifugal force. However, since the peripheral portion of the porous filter 7 is compressively held between the insert-molded fused portion 17 and the cylindrical portion 25 of the cap, the sample solution 100 is prevented from penetrating into the circumferential edge of the porous filter 7. Thus, the nucleic acids in the sample solution 100 are adsorbed onto only the part of the porous filter 7 surrounded by the end of the fused portion 17.

A washing buffer solution for washing nucleic acids is then poured into the inlet opening 19 of the porous filter cartridge 1 and made to flow under pressure to the outlet opening 29 of the nozzle 31. The washing buffer solution has such a composition that does not elute the nucleic acids adsorbed by the porous filter 7 but desorbs impurities. The washing buffer solution is an aqueous solution containing a main ingredient and a buffering agent and, if needed, a surfactant. A washing buffer solution containing ethanol as a main ingredient, Tris, and Triton X-100 is preferred. By this operation, impurities other than nucleic acids are removed from the porous filter 7.

In the above operation, the washing buffer solution sufficiently passes through the same portion of the porous filter 7 where the sample solution has passed, i.e. , the portion surrounded by the end of the fused portion 17. As a result, impurities are removed without remaining in the peripheral portion of the porous filter 7.

Purified distilled water, TE buffer, or the like is then made to flow under pressure from the inlet 19 to the outlet opening 29 of the nozzle 31 to elute the nucleic acids from the porous filter 7. The effluent, i.e., a solution containing nucleic acids is collected.

As illustrated in Fig. 7, on being fitted into the cap 5, the porous filter 7 comes into a nearly point contact at its central portion with the convex surface 41 of the junction 43. There is thus provided a space 47 between the porous filter 7 and the convex surface 41. Formation of the space 47 secures reduction of contact area between the porous filter 7 and the top surface of the junction 43, resulting in an increase of effective filter area. The space 47 thus facilitates good drainage of the solution. As a result, contamination hardly occurs, there is no need to separately use an element for supporting the filter, and a filtration and an extraction operation are carried out efficiently without involving a break of the porous filter 7 even when a high pressure is applied thereto.

According to the configuration of the porous filter cartridge 1 of the first embodiment, since the outer diameter L1 of the junction 43 is larger than the thickness T1 of the crossing ribs 35, the porous filter 7 is supported on the junction 43 having a larger outer diameter than the thickness of the crossing ribs 35 at the center of the cap. This supporting manner allows for stable filtration and extraction operations.

According to the configuration of the porous filter cartridge 1 of the first embodiment, since the porous filter 7 is equally supported by the crossing ribs 35, the auxiliary ribs 37, and the auxiliary ribs 39, stress concentration does not occur in the porous filter 7. Therefore, the porous filter 7 is stably supported, being prevented from breaking.

### [II] Second embodiment

A second embodiment of the porous filter cartridge according to the invention will then be described.
The porous filter cartridge of the second embodiment is structurally the same as that of the first embodiment, except for the difference in shape of the crossing ribs 35 and the auxiliary ribs 37 and 39.

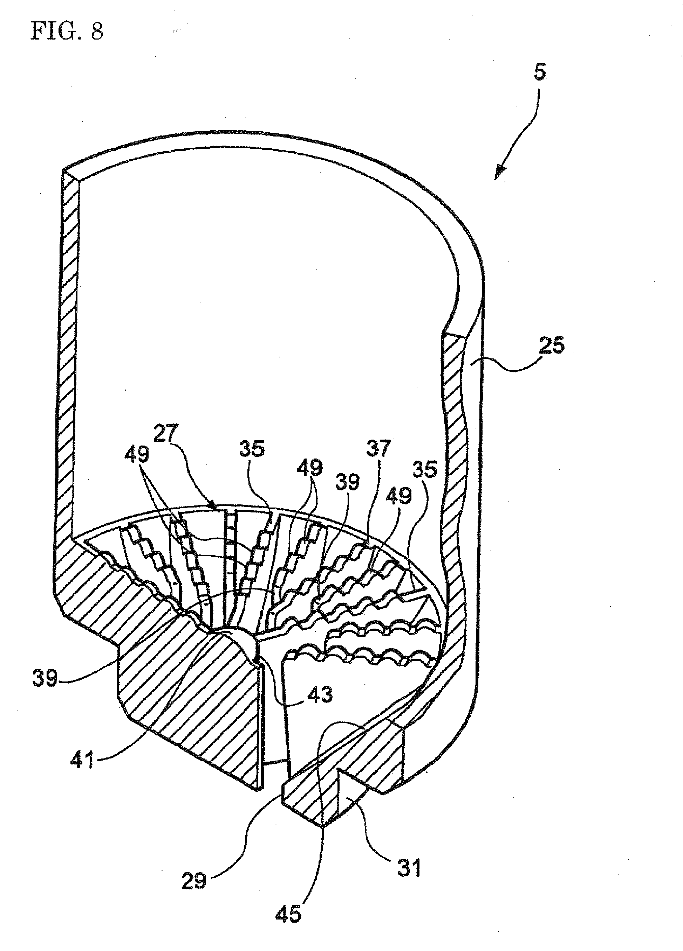

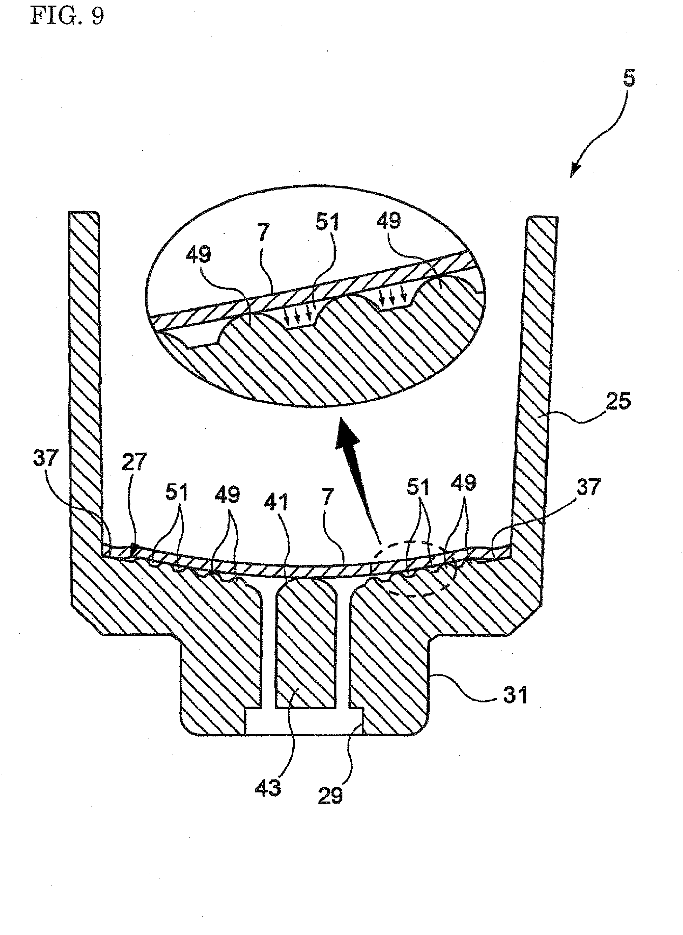

Fig. 8 is a perspective view of the cap used in the second embodiment with a part cut away (equivalent to Fig. 5). Fig. 9 is a cross-sectional view of the cap, taken along line I-I (equivalent to Fig. 4).

As illustrated in Fig. 8, in the cap of the second embodiment, the crossing ribs 35 and the auxiliary ribs 37 and 39 are shaped to have a series of protrusions 49 bulging toward the porous filter side on their top surface. The height of the individual protrusions 49 is smaller than the thickness of the top of the crossing ribs 35 and the auxiliary ribs 37 and 39. Every protrusion is smoothly curved. While in the illustrated example each rib has a series of half-moon-shaped protrusions 49 on its top, the shape of the protrusions is not limited thereto. For example, a series of protrusions 49 may have the shape of a continuous wave, like a sine curve.

According to the configuration of the second embodiment, the porous filter 7 fitted into the cap 5 is not only in a nearly point contact with the convex surface 41 of the junction 43 at the center thereof but in a nearly point contact with the protrusions 49 on the top of the ribs 35, 37, and 39. Thus, a number of additional spaces 51 are formed between the porous filter 7 and the top of the ribs 35, 37, and 39. As a result, the solution drains well by these space 51 as well as the space defined by the convex surface 41 of the junction 43 (the space 47 in Fig. 7).

### [III] Making of cap

The method of making the cap 5 of the porous filter cartridge 1 will be described.

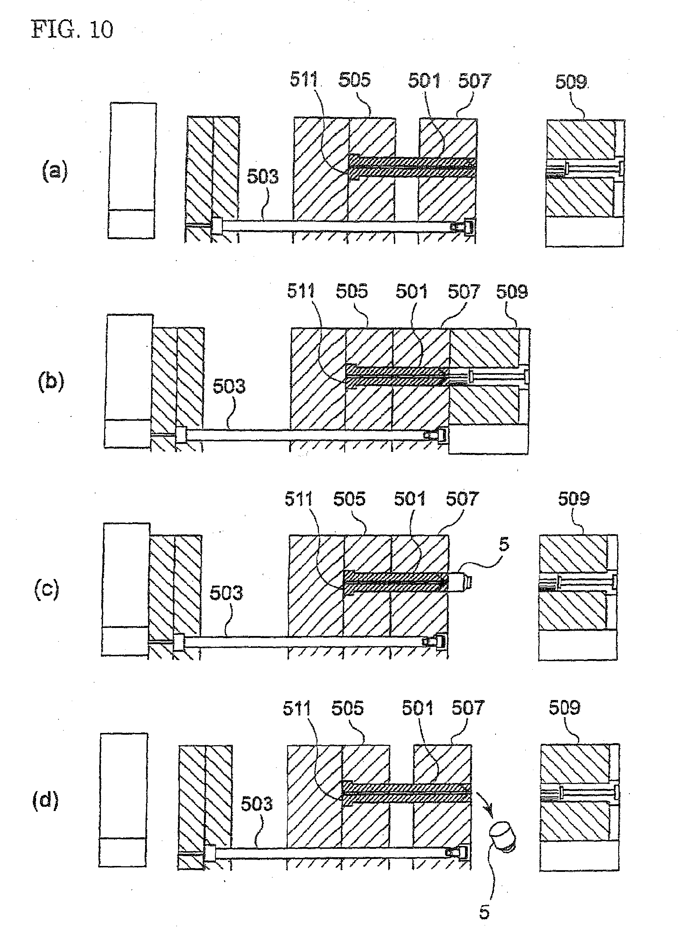

Fig. 10 is partial cross-sectional views illustrating at (a) through (d), step by step, the making of the cap of a porous filter cartridge of the invention.

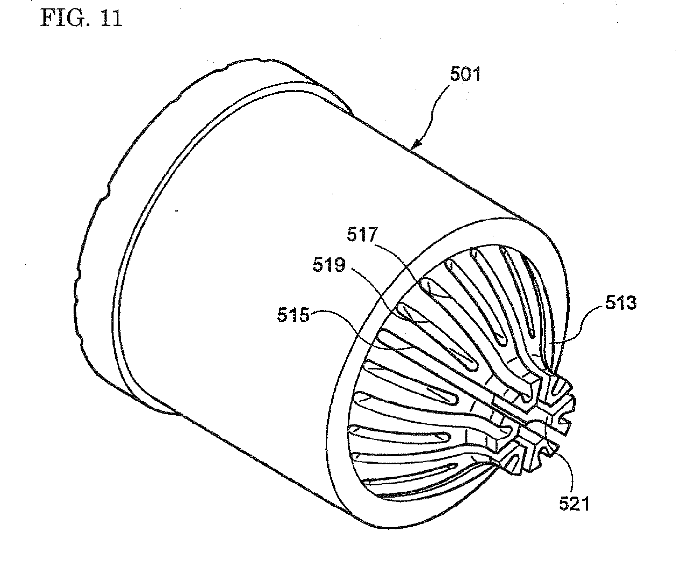

As illustrated in Fig. 10(a), a pin 501 that is a core mold for producing a cap is fixed to a first jig 505 that is slidably supported on a rod 503. The pin 501 has formed therein a runner 511 for feeding a resin material and is configured to inject the resin material from the gate at the tip thereof. An enlarged perspective view of the tip of the pin 501 is shown in Fig. 11. The tip portion of the pin 501 is slidably supported by a second jig 507. A third jig 509 is provided retractably and advanceably with respect to the second jig 507 and has a cup 502 providing a cavity between it and the core mold 501.

In the step illustrated in Fig. 10(b), the second jig 507 and the third jig 509 are moved to the second jig 507, and a resin material is injected from the gate of the pin 501 into the cavity of the cup 502 covering the tip of the pin 501.

After an elapse of a prescribed period of time during which the resin material in the cup 502 is cooled and solidified, the third jig 509 is retracted away from the second jig 507 with the molded cap 5 left on the tip of the pin 501 as illustrated in Fig. 10(c).

In the step illustrated in Fig. 10 (d), the second jig 507 is moved toward the third jig 509, whereupon the cap 5 molded around the tip of the pin 501 is released and taken up.

The detailed structure of the pin 501 shown in Fig. 10 is given below.
As illustrated in Fig. 11, the pin 501 has a generally conical projection 513. The generally conical projection 513 has recesses 515 for shaping the crossing ribs 35 and recesses 517 and 519 for shaping the auxiliary ribs 37 and 39, respectively, arranged in the circumferential direction thereof. The generally conical projection 513 has a hole 521 for shaping the junction 43 in the central portion thereof. The inner circumferential wall of the hole 521 is formed of arcs so that the junction 43 may be circular column shaped.

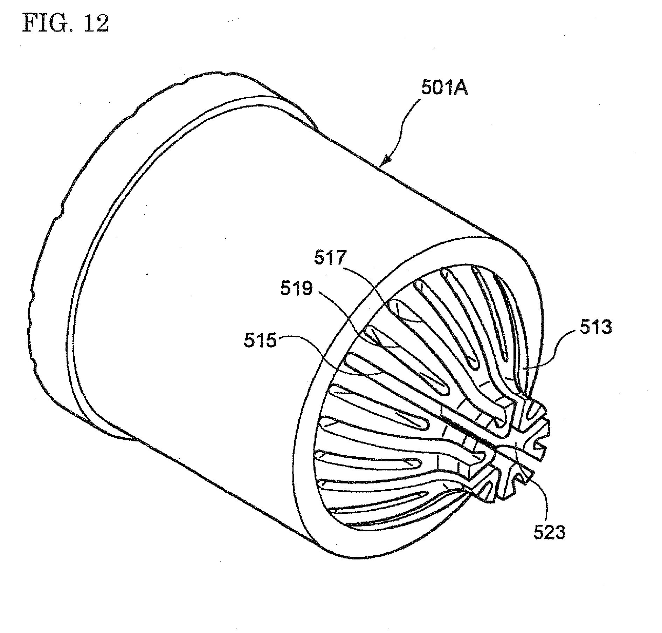

The shape of the junction 43 is not limited to that defined by the shape of the pin 501 shown in Fig. 11 and is appropriately modifiable. For example, a junction 43 having a fillet between its outer peripheral surface and each side wall of every crossing rib 35 may be formed by using the pin 501A illustrated in Fig. 12. That is, in Fig. 12, the edges defining the hole 523 are rounded so that the side walls of the crossing ribs 35 and the outer peripheral surface of the junction 43 may form a smoothly curved surface where they meet.

### [IV] Method of producing porous filter cartridge

The method for producing a porous filter cartridge having the cap 5 is described below.

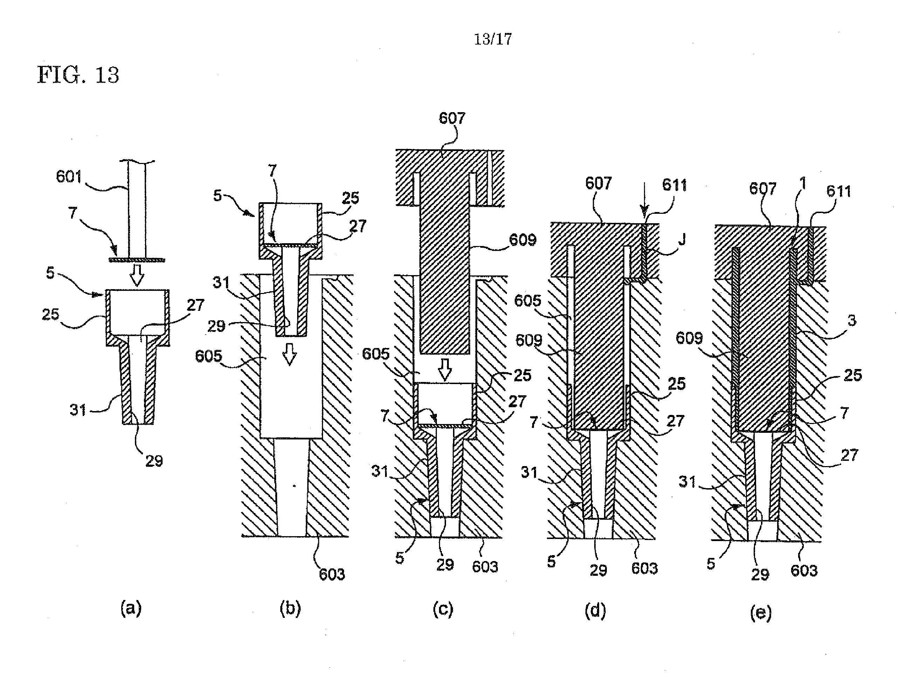

Fig. 13 illustrates, by each of the steps (a) to (e), the production of a porous filter cartridge. These figures are conceptual diagrams of the production steps, in which the porous filter cartridge is schematically illustrated.
Fig. 13 shows placement of a porous filter ((a)), insertion ((b)), mold closing ((c)), resin injection ((d)), and completion of injection ((e)).

As illustrated in Fig. 13 (a), a porous filter 7 is placed on the ribs 27 of the bottom of the cap 5 to make an insert. The porous filter 7 is inserted inside the cylindrical portion 25 of the cap 5 while being held by suction to a suction pad 601 of an automated system. The inserted porous filter 7 is placed flat on the ribs 27 without a lift.

The thus prepared insert is mounted in the cavity 605 of an injection mold (cap side mold) 603 as illustrated in Fig. 13(b).

As shown in Fig. 13(c), an injection mold (barrel side mold) 607 is combined with the cap side mold 603 having the insert placed therein, and the molds are closed.

The barrel side mold 607 has a circular columnar core pin 609 at the location corresponding to the inlet 19 (see Fig. 1) of the porous filter cartridge 1. When the two molds 603 and 607 are closed, the core pin 609 comes into contact on its tip surface with the upper side of the porous filter 7, whereby the porous filter 7 is held between the cap 5 and the tip of the core pin 609 and compressed therebetween to a predetermined thickness enough to prevent a resin J injected in the subsequent step from leaking. In other words, the core pin 609 has a length designed to compress the porous filter 7 to a thickness enough to prevent leakage of the resin J injected in the next step. The barrel side mold 607 has a gate 611 to be configures to inject the resin J into the cavity 605.

A molten resin J is injected from the gate 611 into the cavity 605 defined by the cap side mold 603, the barrel side mold 607, and the insert as illustrated in Fig. 13(d). The peripheral portion of the porous filter 7 is deformed by the injection pressure of the resin J filling the cavity 605. To put it another way, the injection pressure applied to inject the molten resin J into the cavity 605 should be enough to adequately deform the peripheral portion of the porous filter 7.

After the injection of the resin J completes, and the resin J cools and cures to form the barrel 3 as illustrated in Fig. 13(e), the molds are opened, and the porous filter cartridge 1 is removed, in which the porous filter 7 is secured on the ribs 27 in the cap 5 with its peripheral portion held in between the injection molded barrel 3 and the cap 5.

### [V] Nucleic acid extraction

In what follows, extraction operations using a nucleic acid extraction system and materials used therefor are described in detail.

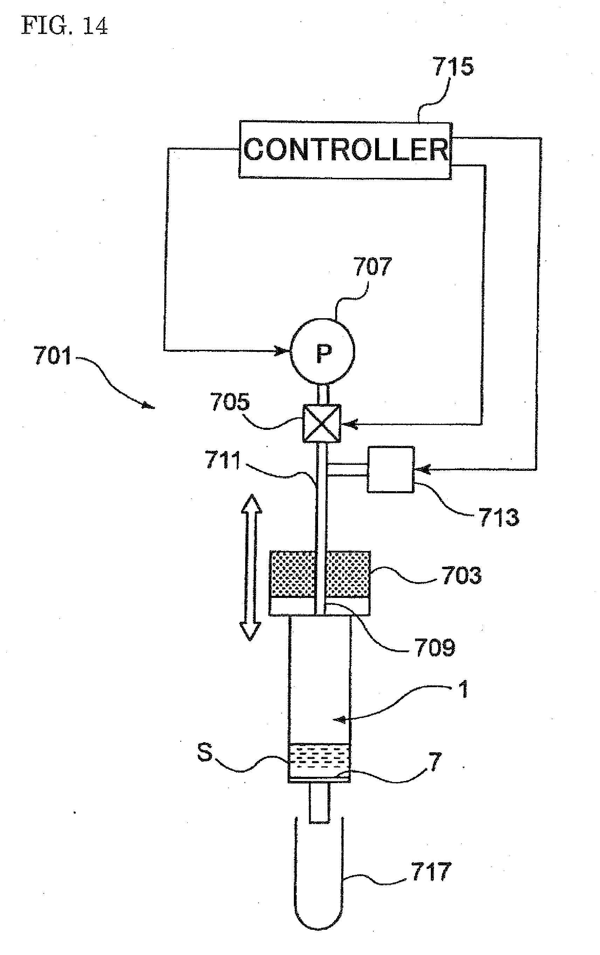

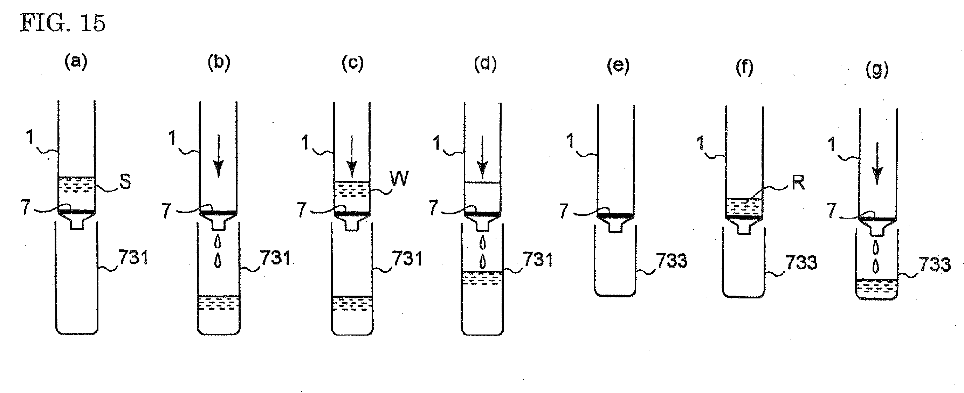

Fig. 14 is a schematic block diagram of a system configuration for nucleic acid extraction. Fig. 15 illustrates steps (a) through (g) for extracting nucleic acids.

The nucleic acid extraction system 701 illustrated in Fig. 14 has a movable head 703 that moved vertically with respect to a porous filter cartridge 1. The moving head 703 is connected to an air pump 707 via a solenoid valve 705. The solenoid valve 705 is connected to a pressure nozzle 709 via a pipe 711. A pressure sensor 713 is provided in the pipe 711 to monitor the pressure in the pipe 711 and feeds back the results to a controller 715.

The porous filter 7 of the porous filter cartridge 1 used in the nucleic acid extraction system 701 is a nucleic acid-adsorbing porous membrane. A sample solution is put into the porous filter cartridge 1 having the nucleic acid-absorbing porous membrane and forced to pass through the porous filter 7 under pressure applied from the inlet side of the porous filter cartridge 1. Nucleic acids in the sample solution are thus adsorbed onto the nucleic acid-adsorbing porous membrane. Thereafter, a washing solution and an eluting solution are poured to wash and elute the nucleic acids and collect the eluted nucleic acids in a prescribed container 717.

More specifically, nucleic acid extraction is carried out with the nucleic acid extraction system 701 basically in accordance with the steps (a) through (g) illustrated in Fig. 15. Fig. 14 will also be referred to in the following description.

In step (a) of Fig. 15, a waste liquid container 731 is set under the cartridge 1, and a sample solution S containing a lysed nucleic acid is poured in the cartridge 1 successively, using, for example, a pipette. The pressure nozzle 709 of the moving head 703 is positioned right above the cartridge 1, and the pressure nozzle 709 is moved down until the periphery of the tip of the pressure nozzle 709 closely contacts the cartridge 1.

In step (b), compressed air is introduced into the cartridge 1 to apply pressure. Under command of the controller 715, an air pump 707 is driven with the solenoid valve 705 closed, and the solenoid valve 705 is then opened to supply a predetermined amount of compressed air from the air pump 707 through the pressure nozzle 709 into the cartridge 1. The sample solution S is thus forced to pass through the nucleic acid-adsorbing porous membrane 7 to make the nucleic acid be adsorbed to the nucleic acid-absorbing porous membrane 7. The liquid having passed through the porous membrane 7 is discharged in the waste liquid container 731.

In step (c), a washing solution W is dispensed into the cartridge 1. In step (d), compressed air is introduced into the cartridge 1 to apply pressure, thereby to wash away impurities while keeping the nuclei acid adsorbed onto the nucleic acid-adsorbing porous membrane 7. The washing solution W having passed through the porous membrane is withdrawn in the water liquid container 713. The steps (c) and (d) may be repeated a plurality of times.

In step (e), the waste liquid container 731 below the cartridge 1 is replaced with a recovery container 733. In step (f), a recovering solution R is dispensed into the cartridge 1. In step (g), compressed air is introduced into the cartridge 1 to apply pressure to lessen the binding force between the nucleic acid and the nucleic acid-adsorbing porous membrane 7, whereby the adsorbed nucleic acid is released, and the recovering solution R containing the nucleic acid is collected in the recovery container 733. The used cartridge 1 and the waste liquid container 731 are detached from the system and disposed of. After the liquid recovery, the recovery container 733 may be closed with a lid if necessary.

### [VI] Material of porous filter

The nucleic acid-adsorbing solid phase (for example, the nucleic acid-adsorbing porous membrane) possessed by the porous filter 7 in the porous filter cartridge 1 will be described in detail.
The nucleic acid-adsorbing solid phase may contain silica or its derivative, diatomaceous earth, or alumina. The solid phase may contain an organic polymer. The organic polymer preferably has a polysaccharide structure. The organic polymer may be an acetyl cellulose. The organic polymer may also be a saponification product of an acetyl cellulose or a saponification product of a mixture of acetyl celluloses different in acetyl value. The organic polymer may also be regenerated cellulose. These polymer materials will be described in detail below.

The nucleic acid-adsorbing solid phase possessed by the porous filter 7 is basically porous for letting nucleic acids to pass through, and its surface is configured such that it adsorbs nucleic acids in a sample solution through a chemical binding force, retains the adsorbed nucleic acids while being washed with a washing solution, and reduces the nucleic acid adsorptivity when treated with a recovering solution thereby to release the nucleic acids to be recovered.

The nucleic acid-adsorbing solid phase possessed by the porous filter 7 is preferably a porous solid phase that adsorbs a nucleic acid through interaction involving substantially no ionic bond. This means that ionization does not occur under the use conditions in the side of the porous solid phase, and it is presumed that a nucleic acid and the porous solid phase come to be attracted to each other by changing the polarity of the environment. Being so configured, the porous solid phase exhibits excellent separation performance and good efficiency in washing to achieve isolation and purification of nucleic acids. Preferably, nucleic acid-adsorbing porous solid phase is a porous solid phase having a hydrophilic group, in which case it is presumed that the hydrophilic group of a nucleic acid and that of the porous solid phase come to be attracted to each other upon changing the polarity of the environment.

The term "hydrophilic group" as used herein refers to a polar group (atomic group) interactive with water, and includes all the groups (atomic groups) which are involved in nucleic acid adsorption. Hydrophilic groups having moderate strength of interaction with water (see Encyclopaedia CHIMICA, Kyoritsu Shuppan Co., LTD., "groups that are not too strong in hydrophilicity" under the word "hydrophilic group") are preferred. Examples of such hydrophilic groups include hydroxyl, carboxyl, cyano, and oxyethylene, with hydroxyl being preferred.

The porous solid phase having a hydrophilic group as discussed above may be a porous solid phase made of a material having per se a hydrophilic group or a porous solid phase having been treated or coated to have a hydrophilic group introduced therein. The material that forms a porous solid phase may be either organic or inorganic. That is, the porous solid phase may be a porous solid phase made of an organic material having per se a hydrophilic group, a porous solid phase made of an organic material having no hydrophilic group and having been treated to introduce a hydrophilic group therein, a porous solid phase made of an organic material having no hydrophilic group and having been coated with a material having a hydrophilic group to have the hydrophilic group introduced therein, a porous solid phase made of an inorganic material having per se a hydrophilic group, a porous solid phase made of an inorganic material having no hydrophilic group and having been treated to introduce a hydrophilic group therein, or a porous solid phase made of an inorganic material having no hydrophilic group and having been coated with a material having a hydrophilic group to introduce the hydrophilic group therein. It is preferred to use an organic material, such as an organic polymer, to make a porous solid phase in terms of ease of processing.

The porous solid phase made of a material having a hydrophilic group is exemplified by a porous solid phase of an organic material having a hydroxyl group. Examples of the porous solid phase made of an organic material having a hydroxyl group include those made of polyhydroxyethylacrylic acid, polyhydroxyethylmethacrylic acid, polyvinyl alcohol, polyvinylpyrrolidone, polyacrylic acid, polymethacrylic acid, polyoxyethylene, an acetyl cellulose, and a mixture of acetyl celluloses having different acetyl values. It is particularly preferred to use a porous solid phase made of an organic material having a polysaccharide structure.

The porous solid phase made of an organic material having a hydroxyl group is preferably a porous solid phase of an organic polymer composed of a mixture of acetyl celluloses having different acetyl values. Preferred examples of the mixture of acetyl celluloses having different acetyl values include a mixture of triacetyl cellulose and diacetyl cellulose, a mixture of triacetyl cellulose and monoacetyl cellulose, a mixture of triacetyl cellulose, diacetyl cellulose, and monoacetyl cellulose, and a mixture of diacetyl cellulose and monoacetyl cellulose.

It is particularly preferred to use a mixture of triacetyl cellulose and diacetyl cellulose. The mixing ratio (mass ratio) of triacetyl cellulose and diacetyl cellulose is preferably 99:1 to 1:99, and more preferably 90:10 to 50:50.

A more preferred organic material having a hydroxyl group may be exemplified by a surface-saponified acetyl cellulose described in JP 2003-128691A. The surface saponified acetyl cellulose is a product obtained by saponifying a mixture of acetyl celluloses different in acetyl value. Preferred examples of the surface saponified acetyl cellulose include a saponification product of a mixture of triacetyl cellulose and diacetyl cellulose, a saponification product of a mixture of triacetyl cellulose and monoacetyl cellulose, a saponification product of a mixture of triacetyl cellulose, diacetyl cellulose, and monoacetyl cellulose, and a saponification product of a mixture of diacetyl cellulose and monoacetyl cellulose. It is more preferred to use a saponification product of a mixture of triacetyl cellulose and diacetyl cellulose. The mixing ratio (mass ratio) of the mixture of triacetyl cellulose and diacetyl cellulose is preferably 99:1 to 1: 9, more preferably 90:10 to 50:50. In this case, the amount (density) of the hydroxyl groups on the solid phase surface is controllable by the degree of saponification treatment (percent saponification). The larger the amount (density) of the hydroxyl groups, the higher the nucleic acid separation efficiency. In the case of an acetyl celluloses, like triacetyl cellulose, the percent saponification (percent surface saponification) is preferably about 5% or greater, more preferably 10% or greater. To saponify the porous solid phase of an acetyl cellulose is also preferred from the viewpoint of increasing the surface area of the organic high polymer having hydroxyl groups. The porous solid phase made of the surface saponified acetyl cellulose may be symmetric or asymmetric but is preferably asymmetric.

The saponification treatment refers to the contacting of acetyl cellulose with a solution for saponification treatment (for example, an aqueous solution of sodium hydroxide). The portion of the acetyl cellulose contacted by the solution for saponification treatment changes to regenerated cellulose, where hydroxyl groups are introduced. The regenerated cellulose thus produced is different from the original cellulose in the crystalline state and the like.
The percent saponification may be varied by varying the sodium hydroxide concentration. The percent saponification is easily determined by NMR, IR or XPS. For example, the percent saponification may be determined by the degree of peak reduction for a carbonyl group.

Introducing a hydrophilic group to a porous solid phase of an organic material having no hydrophilic groups may be achieved by bonding a graft polymer chain having a hydrophilic group in its main chain or side chain to the porous solid phase.
There are two methods for bonding a graft polymer chain to a porous solid phase of an organic material. One is chemically bonding a graft polymer chain to the porous solid phase, and the other is polymerizing a compound having a polymerizable double bond and capable of starting polymerizing at sites of the porous solid phase surface to form grafted polymer chains.

In the first method in which a graft polymer chain is attached to the porous solid phase by chemical bonding, a polymer having a functional group reactive with the porous solid phase at the terminal thereof or in the side chain thereof is used. The functional group of the polymer is caused to chemically react with the functional group of the porous solid phase. The functional group reactive with the porous solid phase is not particularly limited as long as it is reactive with the functional group of the porous solid phase. Examples thereof include a silane coupling group, such as alkoxysilane, an isocyanate group, an amino group, a hydroxyl group, a carboxyl group, a sulfonic acid group, a phosphoric acid group, an epoxy group, an allyl group, a methacryloyl group, and an acryloyl group.

Examples of particularly useful compounds as the polymer having a reactive functional group at the terminal thereof or in the side chain thereof include a polymer having a trialkoxysilyl group at the terminal thereof, a polymer having an amino group at the terminal thereof, a polymer having a carboxyl group at the terminal thereof, a polymer having an epoxy group at the terminal thereof, and a polymer having an isocyanate group at the terminal thereof. For that use, any polymer having hydrophilic groups participating in the nucleic acid adsorption may be used. Examples thereof include polyhydroxyethylacrylic acid and its salt, polyhydroxyethylmethacrylic acid and its salt, polyvinyl alcohol, polyvinylpyrrolidone, polyacrylic acid and its salt, polymethacrylic acid and its salt, and polyoxyethylene.

The second method for forming grafted polymer chains by polymerizing a compound having a polymerizable double bond and capable of starting polymerizing at sites on the porous solid phase surface is generally called "surface graft polymerization". Surface graft polymerization is a technique in which an active species is introduced on the surface of a polymer substrate by means of plasma treatment, light irradiation, heating or the like, and a compound having a polymerizable double bond that is disposed in contact with the porous solid phase is polymerized and bonded to the porous solid phase.

The compound that can be used to form grafted polymer chains bound to a substrate should have a polymerizable double bond and a hydrophilic group participating in the nucleic acid adsorption. Such a compound may be any of polymers, oligomers, and monomers having a hydrophilic group and a double bond in the molecule thereof. A particularly useful compound is a monomer having a hydrophilic group.

Specific examples of the particularly useful monomer having a hydrophilic group include monomers containing a hydroxyl group, such as 2-hydroxyethyl acrylate, 2-hydroxyethyl methacrylate, and glycerol monomethacrylate. Carboxyl group-containing monomers, such as acrylic acid and methacrylic acid, and alkali metal salts and amine salts thereof are also preferably used.

Another method for introducing a hydrophilic group to the porous solid phase of an organic material having no hydrophilic groups is coating the porous solid phase with a material having a hydrophilic group. While any material containing a hydrophilic group that participates in nucleic acid adsorption may be used, polymers of organic materials are preferred for ease of operation. Examples of useful polymers include polyhydroxyethylacrylic acid and its salt, polyhydroxyethylmethacrylic acid and its salt, polyvinyl alcohol, polyvinylpyrrolidone, polyacrylic acid and its salt, polymethacrylic acid and its salt, polyoxyethylene, an acetyl cellulose, and a mixture of acetyl celluloses having different acetyl values. Polymers having a polysaccharide structure are preferred of them.

An acetyl cellulose or a mixture of acetyl celluloses having different acetyl values applied to the porous solid phase of an organic material having no hydrophilic groups may be subjected to saponification. In this case, the percent saponification is preferably about 5% or greater, more preferably about 10% or greater.

The porous solid phase made of an inorganic material having a hydrophilic group is exemplified by a porous solid phase containing silica or a derivative thereof, diatomaceous earth, or alumina. The porous solid phase containing a silica compound is exemplified by glass filter. A thin porous silica membrane such as described in Japanese Patent 3058342 is also included. This thin porous silica membrane may be fabricated by a process including spreading on a substrate a spreading solution of a cationic amphiphilic material capable of forming a bilayer, removing the solvent from the liquid film on the substrate to form a multilayered bilayer membrane of the amphiphilic material, bringing the multilayered bilayer membrane into contact with a solution containing a silica compound, and removing the multilayered bilayer membrane by extraction.

Introducing a hydrophilic group to a porous solid phase of an inorganic material having no hydrophilic groups is achieved by two methods. One is chemically bonding a graft polymer chain to the porous solid phase. The other is polymerizing a monomer having a double bond and a hydrophilic group in its molecule from polymerization initiating sites of the porous solid phase to form grafted polymer chains.

In the case of attaching the graft polymer chains to the porous solid phase by chemical bonding, a functional group reactive with the terminal functional group of the graft polymer chain is introduced to the inorganic material, and the graft polymer is chemically bonded to the introduced functional group of the inorganic material. In the case of polymerizing a monomer having a double bond and a hydrophilic group in the molecule to form grafted polymer chains from polymerization initiating sites of the porous solid phase, a functional group that serves as the initiating site for the polymerization of the compound having a double bond is introduced to the inorganic material.

The same graft polymers having hydrophilic groups as described above (for use in the method including chemically bonding a graft polymer chain to the porous solid phase of an organic material having no hydrophilic groups) and the same monomers having a double bond and a hydrophilic group in the molecule as described above are preferably used here for the porous solid phase of an inorganic material.

Another method for introducing a hydrophilic group to the porous solid phase of an inorganic material having no hydrophilic groups is coating the porous solid phase with a material having a hydrophilic group. While any material having a hydrophilic group that participates in nucleic acid adsorption may be used, polymers of organic materials are preferred for ease of operation. Examples of useful polymers include polyhydroxyethylacrylic acid and its salt, polyhydroxyethylmethacrylic acid and its salt, polyvinyl alcohol, polyvinylpyrrolidone, polyacrylic acid and its salt, polymethacrylic acid and its salt, polyoxyethylene, an acetyl cellulose, and a mixture of acetyl celluloses having different acetyl values.

An acetyl cellulose or a mixture of acetyl celluloses having different acetyl values applied to the porous solid phase of an inorganic material having no hydrophilic groups may be subjected to saponification. The percent saponification is preferably about 5% or greater, more preferably about 10% or greater.

Examples of the porous solid phase of an inorganic material having no hydrophilic groups include porous solid phases made by processing metals, such as aluminum, glass, cement, ceramics, such as pottery, porcelain, and new ceramics, silicon, activated carbon, or the like.

The nucleic acid-adsorbing porous membrane may be in any form of a porous membrane, nonwoven fabric, or woven fabric. The nucleic acid-adsorbing porous membrane is capable of permitting a solution to pass through (i.e., permeable to a solution), and has a thickness of 10 to 500 µm, more preferably 50 to 250 µm. In view of the ease of washing, a thinner membrane is more desirable.

The nucleic acid-adsorbing porous membrane permeable to a solution has a minimum pore size of 0.22 µm or greater, more preferably 0.5 µm or greater. It is desirable to use a porous membrane having a maximum to minimum pore size ratio of 2 or more. With the ratio recited, a sufficient surface area to adsorb nucleic acids is secured, and clogging hardly occurs. Even more preferably, the maximum to minimum pore size ratio is 5 or greater.

The nucleic acid-adsorbing porous membrane permeable to a solution has a porosity of 50% to 95%, more preferably 65% to 80%. The bubble point is preferably from 0.1 to 10 kgf/cm² (9.8 to 980 kPa), more preferably from 0.2 to 4 kgf/cm² (19.6 to 392 kPa).

The nucleic acid-adsorbing porous membrane permeable to a solution preferably has a pressure loss of 0.1 to 100 kPa. With this pressure loss, pressure application results in uniform pressure. More preferably, the pressure loss is 0.5 to 50 kPa. As used herein, the term "pressure loss" denotes the minimum pressure required for the membrane to permit water to pass through per 100 µm of the membrane thickness.

The nucleic acid-adsorbing porous membrane permeable to a solution preferably has a water permeation rate of 1 to 5000 ml per square centimeter of the membrane per minute (ml/cm²/min), more preferably 5 to 1000 ml/cm²/min, as measured at a water temperature of 25°C and under a water pressure of 1 kg/cm² (98 kPa).

The nucleic acid-adsorbing porous membrane permeable to a solution preferably has a nucleic acid adsorption capacity of 0.1 µg or more per mg of the porous membrane, more preferably 0.9 µg or more per mg of the porous membrane.

The nucleic acid-adsorbing porous membrane permeable to a solution is preferably made of a cellulose derivative having such dissolving properties that, when a 5 mm square piece of the porous membrane is immersed in 5 ml of trifluoroacetic acid, it does not dissolve in 1 hour but dissolves in 48 hours. More preferably, the cellulose derivative has such dissolving properties that, when a 5 mm square piece of the porous membrane is immersed in 5 ml of trifluoroacetic acid, it dissolves in 1 hour but, when immersed in 5 ml of dichloromethane, it does not dissolve in 24 hours.

When a sample solution containing a nucleic acid is passed through the nucleic acid-adsorbing porous membrane, it is preferable to pass the sample solution from one side to the other side from the perspective that the porous membrane may uniformly be contacted by the sample solution. When a sample solution containing a nucleic acid is passed through the nucleic acid-adsorbing porous membrane, it is preferable to pass the sample solution from the side having a larger pore size of the porous membrane to the opposite side having a smaller pore size from the perspective of preventing clogging.

When a sample solution containing a nucleic acid is passed through the nucleic acid-adsorbing porous membrane, the flow rate is preferably 2 to 1500 µl/sec per cm² of the membrane to assure an adequate contact time of the solution with the porous membrane. When the contact time of the solution with the porous membrane is too short, sufficient effects of nucleic acid extraction cannot be obtained. Too long a contact time is unfavorable from an operating standpoint. The flow rate is more preferably 5 to 700 µm/sec per cm² of the membrane.

The nucleic acid-adsorbing porous membrane permeable to a solution may be used singly, or two or more of such membranes may be used in combination. The two or more nucleic acid-adsorbing porous membranes may be either the same or different.

The two or more nucleic acid-adsorbing porous membranes may be a combination of a nucleic acid-adsorbing porous membrane of an inorganic material and a nucleic acid-adsorbing porous membrane of an organic material. For example, a combination of a glass filter and a porous membrane of regenerated cellulose may be used. A combination of a nucleic acid-adsorbing porous membrane of an inorganic material and a nucleic acid-non-adsorbing porous membrane of an organic material, such as a combination of a glass filter and a porous membrane of nylon or polysulfone, may also be used. Because a membrane used to extract nucleic acids is generally as thin as from several tens to several hundreds of micrometers, it is supported, in some cases, on a porous support underlying the membrane. In such cases, the membrane strength may be enhanced by combining the membrane with the support.

### Example 1

The effects of the porous filter cartridge of the invention were tested. The results obtained are described below.

### Test of break resistance:

Example 1 is a porous filter cartridge having six crossing ribs. The junction of the crossing ribs has a convex surface. The outlet opening of the cap has a diameter of 2 mm. Comparative Example 1 is a porous filter cartridge different from Example 1 in that the junction of ribs has a flat top surface. Comparative Example 2 is a porous filter cartridge different from Example 1 in that no ribs cross each other. These cartridges were set in a centrifuge (MX-300 from Tomy Seiko Co., Ltd.) and spun at a stepwise increasing rotational speed (8000 rpm and 15000 rpm), and the broken condition of their porous filters was examined. The results are shown in Table 1 below. The results shown are the numbers of runs where no breakage occurred out of ten test runs. That is, the denominator is the total number of measurements, and the numerator is the number of test runs where no breakage occurred.

**Table 1**

| | Rib Configuration | 8000 rpm | 15000 rpm |
|---|---|---|---|
| Example 1 | 6 crossing ribs (width: 0.2 mm); convexity in the central portion | 10/10 OK | 10/10 OK |
| Comparative Example 1 | 6 crossing ribs (width: 0.2 mm); no convexity in the central portion | 10/10 OK | 8/10 OK |
| Comparative Example 2 | no crossing ribs | 2/10 OK | 0/10 OK |

As is apparent from Table 1, the porous filter of the cartridge of Comparative Example 2 in which the ribs do not cross each other broke, whereas the porous filter of the cartridge of Example 1 in which ribs cross each other and the junction of the crossing ribs has a convex surface did not break at each rotational speed. The porous filter of the cartridge of Comparative Example 1 tended to break at a high rotational speed (15000 rpm). In Comparative Example 2, a breakage of the porous filter was observed at both the rotational speeds.

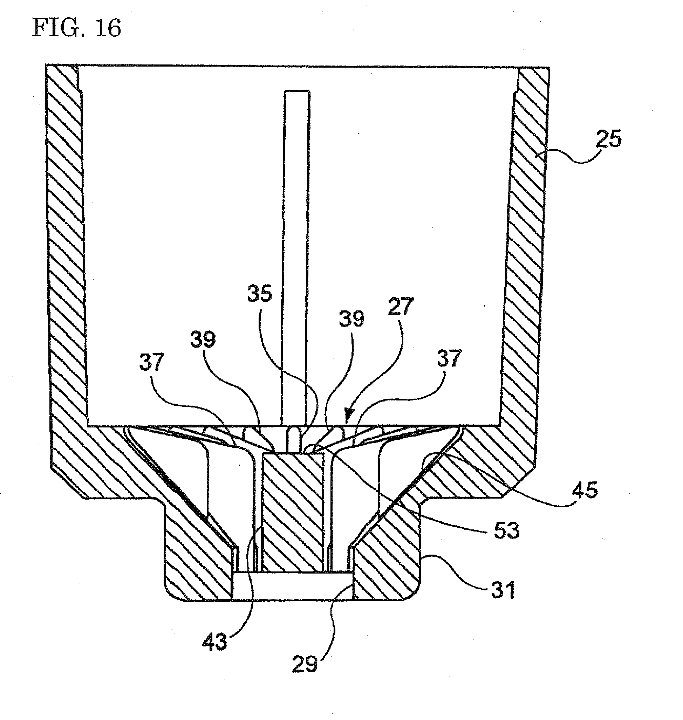

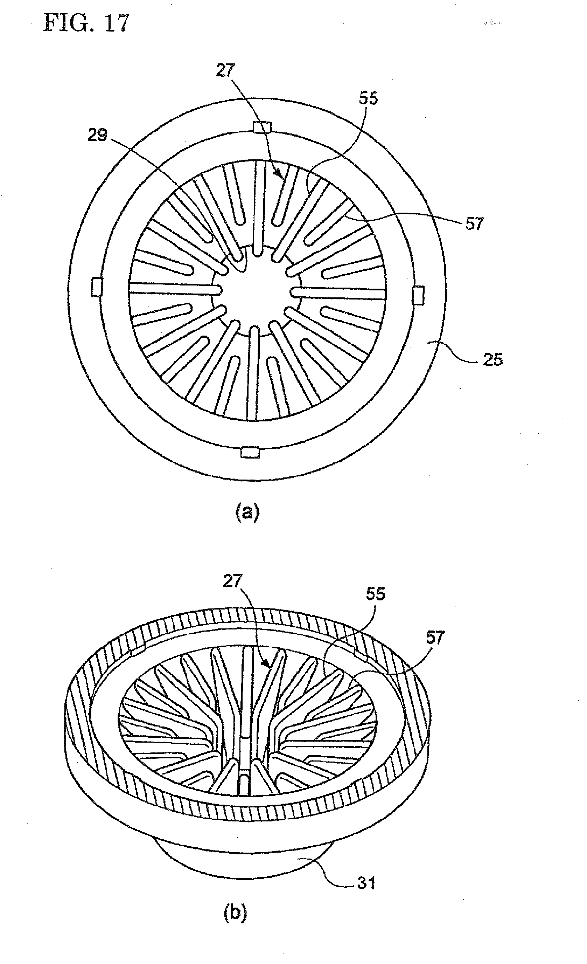

Various modifications and improvements can appropriately be added to the described embodiments of the porous filter cartridge of the invention. For instance, a cartridge configuration in which the top surface of the junction 43 is flat as illustrated in Fig. 16 is sufficiently practical in the cases where the pressure load to the porous filter is small. Furthermore, even when the ribs solely comprise auxiliary ribs (with no crossing ribs), the pressure applied to the porous filter may be dispersed to produce a breakage-preventing effect as long as the ribs are circumferentially arranged with small spacing as illustrated in Fig. 17(a) and (b).

While the present invention has been described with reference to specific embodiments, it is obvious to those skilled in the art that various changes and modifications may be made therein without departing from the spirit and scope thereof.
The present application is based on Japanese Patent Application No. 2008-10604 filed on Jan. 21, 2008, which is incorporated herein by reference in its entirety.

## Claims

1. A porous filter cartridge comprising a cylindrical cap having a bottom and an outlet opening at the bottom and a porous filter held inside the cap on the bottom,
the cap having a plurality of ribs arranged radially about the outlet opening in a standing condition at the bottom of the cap,
at least some of the ribs being connected to each other at the center of the outlet opening to span the outlet opening and forming a junction therebetween, and
the junction having a top surface convex to the porous filter side.

2. The porous filter cartridge according to claim 1, wherein the ribs have a series of protrusions bulging toward the porous filter side on the top surface thereof.

3. The porous filter cartridge according to claim 1 or 2, wherein each of the ribs has rounded edges on its top side in contact with the porous filter.

4. The porous filter cartridge according to any one of claims 1 to 3, wherein the top surface of each of the ribs has a height from the bottom of the cap varied in the radial direction such that the porous filter in contact with the top surface of the ribs has a concave shape to be directed to the outlet opening.

5. The porous filter cartridge according to any one of claims 1 to 4, wherein the ribs at the bottom of the cap comprise ribs having different lengths in the radial direction from the center of the cap.

6. The porous filter cartridge according to any one of claims 1 to 5, wherein the porous filter and the cap are integral with each other and formed by insert molding.

7. The porous filter cartridge according to any one of claims 1 to 6, wherein the porous filter comprises a nucleic acid-absorbing porous membrane.
